# EUROPÄISCHE PATENTSCHRIFT

(11) **EP 1 618 933 B1**
(45) Veröffentlichungstag und Bekanntmachung des Hinweises auf die Patenterteilung: **17.11.2010**
(21) Anmeldenummer: 04017113.4
(22) Anmeldetag: 20.07.2004
(51) Int. Cl.: A63G 7/00, B60R 22/00

(54) **Sicherungssystem für Personentransportanlagen und Fahrgeschäfte**
Security system for a passenger transportation means and amusement rides
Système de sécurité pour le transport de personnes et pour manège forain de parc d attraction

(43) Veröffentlichungstag der Anmeldung: 25.01.2006
(73) Patentinhaber: Maurer Söhne GmbH & Co. KG, 80807 München (DE)
(72) Erfinder: Müller, Alfred, 82194 Gröbenzell (DE); Gettert, Robert, 82256 Fürstenfeldbruck (DE)
(74) Vertreter: GROSSE SCHUMACHER KNAUER VON HIRSCHHAUSEN

(56) Entgegenhaltungen:
- DE-A- 10 260 386
- US-A1- 2004 032 157
- US-B1- 6 513 441

## Beschreibung

Die vorliegende Erfindung betrifft ein Sicherungssystem für Personen in Fahrgeschäften.

In Fahrgeschäften, wie Achterbahnen u.dgl., aber auch in sonstigen Transportanlagen, wie beispielsweise Seilbahnen o.dgl., sind Sicherungs- und Halteeinrichtungen vorgesehen, die verhindern sollen, dass die Personen, die in den Transportanlagen und Fahrgeschäften befördert werden, während der Fahrt aus ihrem gesicherten Aufenthaltsbereich, wie beispielsweise einem Sitz, herausfallen können. Hierzu sind verschiedenste Systeme bekannt, wie beispielsweise Schoßbügel, Schulter- und Kopfbügel u.dgl. Diesen Sicherungs- und Halteeinrichtungen ist gemeinsam, dass sie einerseits eine möglichst umfassende Sicherheit bieten müssen und andererseits für vielfältige unterschiedliche Benutzer geeignet sein sollen. Solche Systeme sind z.B. aus folgenden Veröffentlichungen bekannt: US-A-2004/032157, DE-A-102 60 386, US-B-6513441. Diese beiden Aspekte führen zu divergierenden Anforderungen an die Sicherungs- und Halteeinrichtungen, da beispielsweise bei Schoßbügeln für Achterbahnen die gewünschte Sicherheit nur dann gewährleistet ist, wenn der Schoßbügel ausreichend eng am Körper der zu sichernden Person anliegt, um ein Hindurchgleiten durch eventuelle Zwischenräume zwischen Sicherungs- und Halteeinrichtung einerseits bzw. Sitz andererseits zu verhindern.

Andererseits gibt es durch die unterschiedlichen anatomischen Verhältnisse der Benutzer das Erfordernis, die Sicherungs- und Halteeinrichtungen variabel zu gestalten, so dass sowohl beleibte und schlanke Personen als auch große und kleine Personen die Transportanlage bzw. das Fahrgeschäft benutzen können und dabei ausreichend gesichert sind.

Diese Problematik wird üblicherweise so gelöst, dass die Halteeinrichtungen, wie z.B. Schoßbügel, mehrere Sicherungsstellungen einnehmen können, so dass der Abstand beispielsweise des Schoßbügels zum Sitz bzw. der Sitzfläche oder Rückenlehne variiert werden kann. Dies führt jedoch zu der Problematik, dass u.U. keine ausreichende Sicherung der im Sitz aufgenommenen Person erreicht wird, wenn beispielsweise ein kleines, dünnes Kind in einem Sitz aufgenommen ist, bei dem der Sicherungs- bzw. Schoßbügel lediglich in einer Sicherungsstellung ist, die der einer großen und beleibten Person entspricht bzw. für diese ausreichend ist. Dann besteht die Gefahr, dass das Kind während der Fahrt aufgrund des größeren Abstands der Halteeinrichtung von dem Sitz bzw. der Sitzfläche und Rückenlehne aus dem Sitz herausfallen bzw. herausgeschleudert werden kann.

Es ist deshalb Aufgabe der vorliegenden Erfindung ein Sicherungssystem bereitzustellen, bei dem trotz der Variabilität der Sicherungsstellungen der Halteeinrichtung gewährleistet werden kann, dass für unterschiedlich große und unterschiedlich beleibte Personen eine ausreichende Sicherheit gegeben ist, wobei dieses Sicherungssystem einfach aufgebaut und einfach bedienbar sein soll. Insbesondere soll das Sicherungssystem einen effektiven Betriebsablauf gewährleisten.

Diese Aufgabe wird gelöst durch ein Sicherungssystem mit den Merkmalen der Ansprüche 1 und 2. Vorteilhafte Ausgestaltungen sind Gegenstand der abhängigen Ansprüche.

Das erfindungsgemäße Sicherungssystem, welches in Kombination mit manuellen oder automatischen Überwachungssystemen zur Überwachung, ob überhaupt eine Sicherung der zu sichernden Person stattgefunden hat oder nicht, eingesetzt werden kann, dient insbesondere dem Zweck, automatisch und schnell festzustellen, ob bei einer bereits gesicherten Person eine ausreichende Sicherheit gegeben ist. Zu diesem Zweck wird mittels einer Signalerzeugungseinrichtung überwacht, in welchen Sicherungsstellungen sich die Halteeinrichtung befindet. Hierzu werden mindestens zwei, vorzugsweise jedoch drei oder mehr, Sicherungsbereiche definiert, mit deren Hilfe Sicherungslücken schnell und präzise ermittelt werden können, wobei in einem derartigen Fall ein optisches und/oder akustisches Warnsignal sowie eine automatische Bremse für die Transportanlage oder das Fahrgeschäft ausgelöst werden können, um so das Fahrgeschäft anzuhalten oder den Start zu verhindern. Nach Überprüfung der Sicherungslage kann dann der Bediener das Fahrgeschäft freigeben und/oder entsprechende Maßnahmen ergreifen.

Das erfindungsgemäße Sicherungssystem weist vorzugsweise mindestens zwei Sicherungsbereiche auf, wobei der erste Sicherungsbereich Sicherungsstellungen der Halteeinrichtung umfasst, bei denen große und/oder beleibte Personen in ihrem Aufenthaltsbereich, beispielsweise einem Sitz, ausreichend gesichert sind, aber kleine und/oder schlanke Personen, wie Kinder, nicht ausreichend gesichert sind. Der erste Sicherungsbereich zeichnet sich somit dadurch aus, dass die Halteeinrichtung noch einen relativ großen Abstand zu Sitz-, Steh- oder Lehnflächen des Aufenthaltsbereichs für die zu sichernde Person aufweist. In diesem Sicherungsbereich muss somit überprüft werden, ob tatsächlich eine entsprechende Person mit den anatomischen Voraussetzungen in dem zu sichernden Sitz Platz genommen hat. Entsprechend wird, wenn die Signalerzeugungseinrichtung feststellt, dass die Halteeinrichtung in dem ersten Sicherungsbereich sich befindet, ein entsprechendes optisches und/oder akustisches Warnsignal und/oder ein Signal zur Beeinflussung des Betriebsablaufs, d.h. insbesondere ein Stopsignal, erzeugt, wobei dieses Signal vorzugsweise auch von einer entsprechenden Steuerungseinrichtung verarbeitet werden kann.

Der zweite Sicherungsbereich ist hierbei so definiert, dass auch kleine und/oder schlanke Personen, wie Kinder, ausreichend gesichert sind, so dass bei einer Feststellung der Signalerzeugungseinrichtung, dass die Halteeinrichtung sich im zweiten Sicherungsbereich befindet, kein entsprechendes Warn- und/oder Stopsignal ausgegeben werden muss.

Vorzugsweise wird bei einer bevorzugten Ausführungsform ein dritter Sicherungsbereich definiert, bei dem die Halteeinrichtung sich in einem derartig geringen Abstand zu Steh-, Sitz- oder Lehnflächen des Aufenthaltsbereichs befindet, dass deutlich ist, dass es sich hierbei um eine besonders kleine und/oder schlanke Person, insbesondere ein sehr kleines Kind handeln muss, welches der Begleitung eines Erwachsenen bedarf oder für die Beförderung in der Transportanlage oder dem Fahrgeschäft aufgrund der anatomischen Voraussetzungen nicht geeignet ist. Auch in diesem Fall wird dann durch die Signalerzeugungseinrichtung ein entsprechendes Warn- und/oder Stopsignal ausgegeben, so dass der Bediener die entsprechende Person zum Verlassen des Fahrgeschäfts auffordern kann.

Wie bereits oben ausgeführt, kann das erfindungsgemäße Sicherungssystem in Kombination mit einer automatischen oder manuellen Überwachung zur Feststellung, ob eine Person in dem Fahrgeschäft überhaupt gesichert ist oder nicht, eingesetzt werden.

Bei einer automatischen Überwachung wird automatisch vor Start bzw. Fahrtbeginn festgestellt, ob alle Personen, die in der Transportanlage oder dem Fahrgeschäft Platz genommen haben, gesichert sind oder nicht. Dies kann beispielsweise dadurch geschehen, dass über eine Sensoreinrichtung ermittelt wird, ob in allen einzelnen Aufenthaltsbereichen, wie z.B. Sitzen, des Fahrgeschäfts eine Person Platz genommen hat. Aufgrund dieser Information kann dann festgestellt werden, ob die zugehörige Sicherungs- bzw. Halteeinrichtung sich im geöffneten Zustand oder im geschlossenen, also gesicherten Zustand befindet. Dies kann beispielsweise nach einer vorteilhaften Ausgestaltung mit derselben Signalerzeugungseinrichtung festgestellt werden, die dann nachfolgend auch ermittelt, in welchem Sicherungsbereich sich die Halteeinrichtung befindet. Alternativ können hierzu jedoch auch unterschiedliche bzw. getrennte Signalerzeugungseinrichtungen vorgesehen werden.

Ferner sind andere Systeme zur Feststellung, ob sich die Halteeinrichtung bzw. die Halteeinrichtungen in einem zulässigen Betriebszustand befinden, also bei einer im Aufenthaltsbereich aufgenommenen Person zu Fahrtbeginn ein gesicherter Zustand vorliegt, denkbar. Beispielsweise könnten die Halteeinrichtungen automatisch durch entsprechende Antriebe in eine gesicherte Stellung gebracht werden, unabhängig davon, ob in dem zugehörigen Aufenthaltsbereich bzw. Sitz eine zu sichernde Person vorhanden ist oder nicht. In diesem Fall muss, wie auch bei einer rein manuellen Überwachung, bei der sich der Bediener selbst davon überzeugen muss, dass auf sämtlichen Plätzen, auf denen Personen oder Fahrgäste Platz genommen haben, die Halteeinrichtung betätigt worden ist, keine zusätzliche Signalerzeugungseinrichtung vorgesehen bzw. ein zusätzliches Signal erzeugt werden. Vielmehr wird das erfindungsgemäße Sicherungssystem dann lediglich dafür eingesetzt, dass für die gesicherten Aufenthaltsbereiche der entsprechende Sicherungszustand je nach Sicherungsbereich ermittelt wird. Bevorzugt ist jedoch eine Kombination mit einem automatischen System, bei dem automatisch der Sicherungszustand für alle Aufenthaltsbereiche eingeleitet oder festgestellt wird, so dass sich der Bediener nur noch vom ordnungsgemäßen Gebrauch überzeugen muss.

Vorzugsweise wird das Signal der Signalerzeugungseinrichtung bzw. die Vielzahl von Signalen, die durch die Vielzahl der Aufenthaltsbereiche in einer Transportanlage oder einem Fahrgeschäft erzeugt werden, durch eine Steuerungseinrichtung verarbeitet, die beispielsweise durch einen programmierbaren Mikroprozessor realisiert werden kann.

Eine besonders einfache Möglichkeit, ein erfindungsgemäßes Sicherungssystem bzw. die hierfür erforderliche Signalerzeugungseinrichtung zu realisieren, besteht darin, bei den Halteeinrichtungen, die üblicherweise über einen Dreh-, Kipp- und/oder Schiebemechanismus in Bezug auf den Aufenthaltsbereich beweglich sind, Mittel zur Anzeige der Dreh-, Kipp- und/oder Schiebeposition vorzusehen, wobei diese beispielsweise durch entsprechende mechanische Komponenten, wie z.B. Nocken und mit diesen zusammenwirkende Kippschalter verwirklicht werden können. Selbstverständlich kann die Signalerzeugungseinrichtung auch sämtliche andere geeignete Mittel zur Positionsbestimmung der Halteeinrichtung, wie elektronische Sensoren u.dgl. umfassen.

Nachdem durch das erfindungsgemäße Sicherungssystem eine unzureichende Sicherungssituation in einem bestimmten Aufenthaltsbereich ermittelt worden ist, kann sich der Bediener zielgerichtet und effektiv bei dem die Warnung auslösenden Aufenthaltsbereich von der Sicherungssituation überzeugen und die entsprechenden Maßnahmen ergreifen. Um danach die Fahrt beginnen bzw. fortsetzen zu können, ist vorzugsweise eine Eingabevorrichtung vorgesehen, mittels der der Bediener nach Überprüfung der Sicherungssituation die Startarretierung auflösen und die Fahrtfreigabe erteilen kann.

Weitere Vorteile, Kennzeichen und Merkmale der vorliegenden Erfindung werden bei der nachfolgenden detaillierten Beschreibung dreier Ausführungsbeispiele anhand der beigefügten Zeichnungen deutlich. Die Figuren zeigen in rein schematischer Weise in:

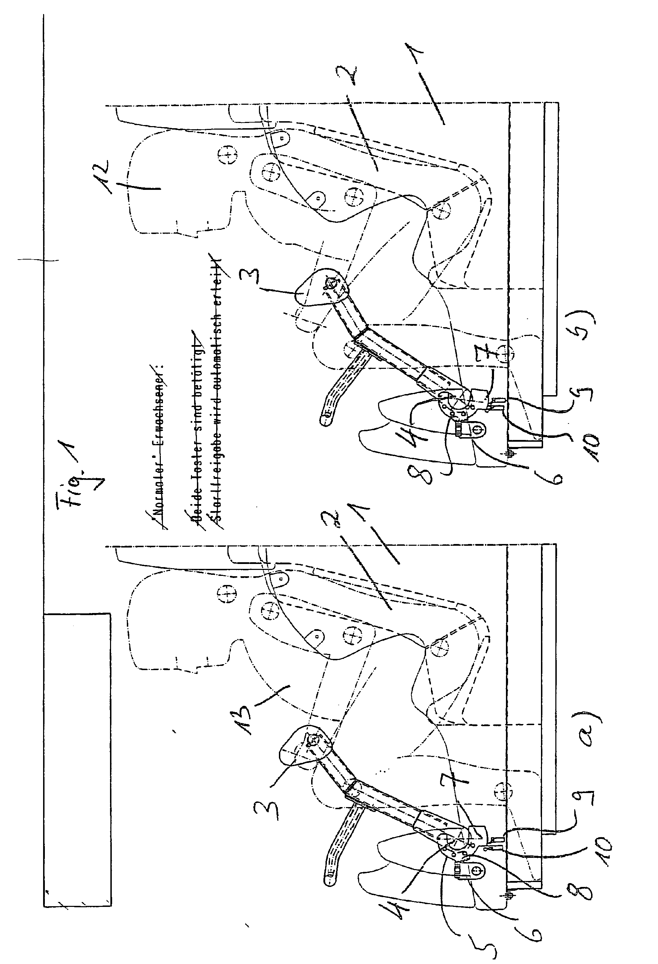

Fig. 1a) und b)
   eine Seitenansicht eines erfindungsgemäßen Sicherungssystems bei einem Sitz eines Achterbahnfahrzeugs, wobei 1a die Sitzposition eines beleibten Erwachsenen zeigt. Der erste Taster ist betätigt, so dass der Bediener per Knopfdruck die Startfreigabe erteilen muss. Fig. 1b zeigt einen 'normalen' Erwachsenen, bei dem beide Taster betätigt sind, so dass die Startfreigabe automatisch erteilt wird.

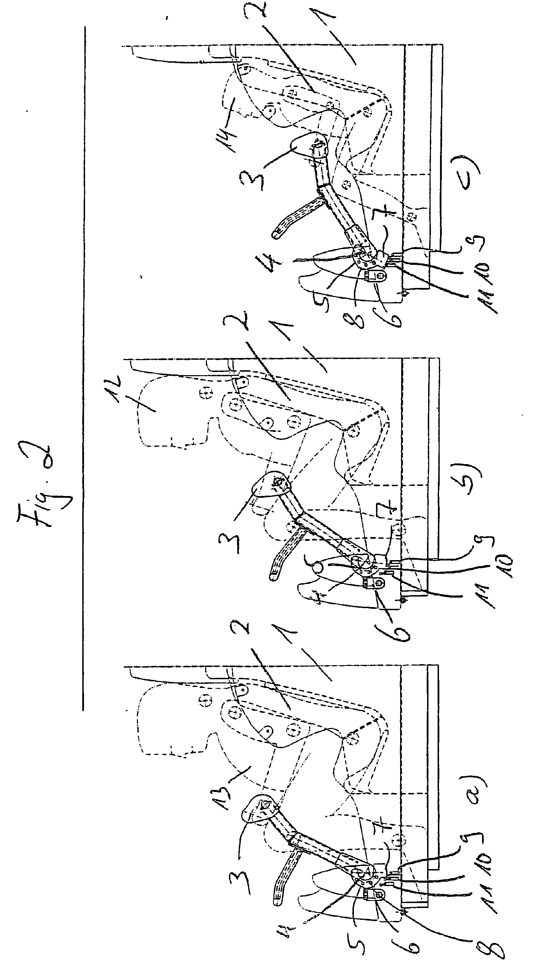

Fig. 2 a) bis c)
   Seitenansichten eines zweiten Ausführungsbeispiels eines erfindungsgemäßen Sicherungssystems ähnlich der Ausführungsform der Fig. 1. Hierbei zeigen Fig.2a und Fig.2b ähnliche Bedingungen wie bei Fig.1a und 1b. Unter Fig.2c wird ein Kind gezeigt, bei dem 3 Taster betätigt sind, so dass der Bediener die manuelle Startfreigabe erteilen muss.

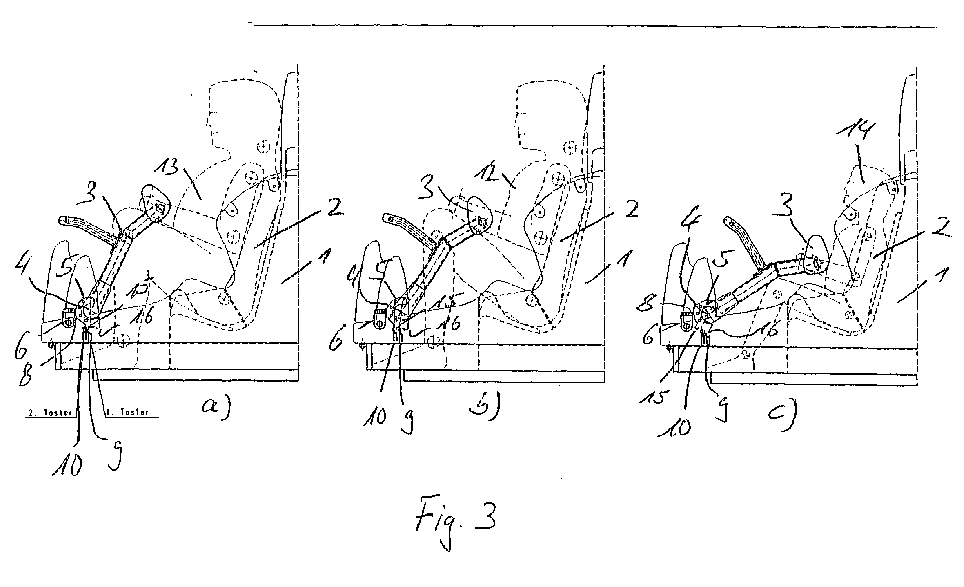

Fig. 3 a) bis c)
   Seitenansichten eines dritten Ausführungsbeispiels, bei dem in Fig.3a der erste Taster betätigt und der zweite Taster unbetätigt ist und eine Bedingung darstellt, dass der Bediener manuell die Startfreigabe erteilen muss. Fig. 3b zeigt einen unbetätigten Taster1 und betätigten Taster 2, was bedeutet, dass die Startfreigabe automatisch erteilt wird. Fig. 3c zeit einen betätigten Taster 1 und unbetätigten Taster 2, was bedeutet, dass die Startfreigabe durch den Bediener erfolgen muss.

In der Fig. 1 ist in den Teilbildern a) und b) in zwei Seitenansichten eine erste Ausfiihrungsform eines erfindungsgemäßen Sicherungssystems bei einem Sitz 2 eines Achterbahnfahrzeugs 1 gezeigt, wobei das Achterbahnfahrzeug nur teilweise dargestellt ist.

Dem Sitz 2 ist eine Halteeinrichtung in Form eines Schoßbügels 3 zugeordnet, der mittels einer Drehvorrichtung 4 um eine senkrecht zur Blattebene laufende Drehachse in Richtung auf den Sitz 2 verschwenkbar ist.

An der Drehvorrichtung 4 ist ein sichelähnliches oder sichelartiges Drehelement 5 vorgesehen, welches sich mit dem Schoßbügel 3 um die vorher bezeichnete Achse dreht. An dem Drehelement 5 sind Rastmittel 8 in Form von hervorstehenden Zacken vorgesehen, die mit einer Arretiervorrichtung 6 zusammenwirken, so dass der Schoßbügel 3 in verschiedenen Positionen entsprechend der Zacken 8 arretiert werden kann. Insofern kann bei dem Schoßbügel 3 zwischen einer ungesicherten Position, in der die Zacken 8 nicht in die Arretiervorrichtung 6 eingreifen und der Schoßbügel im wesentlichen senkrecht nach oben steht, und mehreren gesicherten Position bzw. Sicherungsstellungen unterschieden werden, bei denen der Schoßbügel 3 mittels des Drehelements 5 und der Zacken 8 in seiner Stellung gesichert ist.

Die Zacken 8 greifen hierbei bei der Arretiervorrichtung ebenfalls in entsprechende Rastmittel ein, wobei beispielsweise Rastmittel bzw. Rastaufnahmen vorgesehen sein können, die durch ein Federelement in Richtung des Drehelements 5 bzw. der Zacken vorgespannt sind. Sofern die Rastmittel bzw. Zacken 8 und die Rastaufnahme des Arretierelements 6 entsprechend aufeinander abgestimmt sind, kann der Schoßbügel 3 lediglich in eine Richtung, nämlich in Richtung auf den Sitz 2 durch die verschiedenen Rastpositionen bewegt werden, während für eine entgegengesetzte Bewegung eine Freigabe des Arretiermechanismus 6, beispielsweise durch ein motorisch angetriebenes Zurückziehen der Rastaufnahmemittel, bewirkt werden muss. Dies kann beispielsweise über eine nicht gezeigte Steuerungseinrichtung automatisch nach der Beendigung der Fahrt erfolgen.

Üblicherweise ist auch vorgesehen, dass eine Überwachungseinrichtung bzw. Signalerzeugungseinrichtung derart angeordnet ist, dass automatisch erfasst werden kann, ob der Schoßbügel 3 durch die Zacken 8 und die Arretiervorrichtung 6 gesichert ist, und zwar dann, wenn vor Beginn der Fahrt durch eine weitere Erfassungs- bzw. Sensoreinrichtung ermittelt worden ist, dass auf dem zugeordneten Platz bzw. Sitz 2 eine Person bzw. ein Fahrgast Platz genommen hat. Denkbar ist auch, dass der Schoßbügel 3 durch einen entsprechenden Antrieb unabhängig davon, ob ein Fahrgast auf dem Sitz 2 Platz genommen hat oder nicht, automatisch immer in die erste gesicherte Position gebracht wird, so dass auf eine zusätzliche Erfassungseinrichtung, ob der Sitz 2 besetzt ist oder nicht, verzichtet werden kann. Ferner ist denkbar, dass die Tatsache, ob der Betriebszustand des Schoßbügels, also der Halteeinrichtung, in einem zulässigen bzw. vorgeschriebenen Betriebszustand ist, also ob ein Fahrgast auf dem entsprechenden Sitz Platz genommen hat und deshalb der Schoßbügel vor Fahrtbeginn geschlossen sein muss oder ob auf dem Sitz kein Fahrgast Platz genommen hat und deshalb der Schoßbügel offen bleiben kann, manuell festgestellt wird, indem sich der Bediener der Anlage einen Überblick verschafft, ob die Halteeinrichtungen, also die Schoßbügel 3, bei allen Fahrgästen in einem geschlossenen Zustand sind. In diesem Falle würde mit dem nachfolgend beschriebenen automatischen Sicherungssystem lediglich automatisiert festgestellt werden können, ob bei geschlossenem Schoßbügel die erforderliche Sicherungsstellung erreicht ist oder nicht. Bevorzugt ist jedoch eine Kombination mit einer automatischen Ermittlung, ob der Schoßbügel bzw. die Halteeinrichtung überhaupt in einem vorgeschriebenen Betriebszustand ist, also ob die Halteeinrichtung bei einem mit einer Person besetzten Platz geschlossen ist oder nicht, oder das automatische Verbringen in einen gesicherten Zustand.

Bei den in den Fig. 1 bis 3 gezeigten Ausführungsformen des erfindungsgemäßen Sicherungssystems weist die Drehvorrichtung 4 des Schoßbügels 3 mit dem Drehelement 5 ein Element auf, das sich beim Verschwenken des Schoßbügels 3 mit dreht. Auf diese Weise wird auch die an einem Ende des halbkreisförmig ausgeführten Drehelements 5 angeordnete Nocke 7 bei der Ausführungsform der Fig. 1 verschwenkt. Durch das Verschwenken betätigt die Nocke 7 im Bereich ihres Verschwenkweges angeordnete Kippschalter 9 und 10, wobei die Kippschalter so nebeneinander entlang des Verschwenkweges der Nocke 7 angeordnet sind, dass je nach Kippstellung des Schoßbügels 3 in den unterschiedlichen Sicherungsbereichen unterschiedliche Schaltzustände der Kippschalter 9 und 10 hervorgerufen werden.

Wie in Fig. 1a) zu sehen ist, wird beim Verschwenken des Schoßbügels 3 um einen kleinen Winkelbereich aus der geöffneten Stellung in einer ersten Sicherungsbereich, bei dem noch ein großer Abstand zwischen Schoßbügel 3 und Sitz 2 zur Aufnahme einer beleibteren Person vorhanden ist, lediglich der erste Kippschalter 9 betätigt, während der zweite Kippschalter 10 durch die Nocke 7 noch nicht betätigt wird.

Erst wenn der Schoßbügel 3, wie in Fig. 1b) gezeigt ist, durch weiteres Verschwenken in Richtung des Sitzes 2 in den zweiten Sicherungsbereich gelangt, wird durch die Nocke 7 auch der zweite Kippschalter 10 betätigt.

Da in der Sicherungsstellung gemäß Fig. 1a) für kleine und dünne Personen keine ausreichende Sicherheit gegen Herausfallen aus dem Sitz 2 gegeben ist, also insbesondere der Schutz für Kinder nicht ausreichend ist, wird in der Sicherungsstellung des Schoßbügels 3 in der Fig. 1a) durch eine nicht gezeigte Steuerungseinrichtung oder durch eine entsprechende Auslösung durch den Schaltzustand der Schalterkombination mit den Kippschaltern 9 und 10 ein Signal an den Bediener ausgegeben und eine Startverriegelung für die Transportanlage oder das Fahrgeschäft verursacht. Erst wenn sich der Bediener davon überzeugt hat, dass die Sicherungsstellung des Schoßbügels 3 für die in dem Sitz 2 Platz genommene Person ausreichend ist, kann durch eine entsprechende Eingabe, beispielsweise durch das Auslösen eines Bedienknopfes die Startverriegelung aufgehoben und die Weiterfahrt der Transportanlage oder des Fahrgeschäfts freigegeben werden. Das an den Bediener ausgegebene Warnsignal, das akustisch und/oder optisch sein kann, zeigt vorzugsweise bei einer Vielzahl von Aufenthaltsbereichen genau den oder die Aufenthaltsbereiche an, z.B. durch eine zugeordnete Warnlampe, bei denen der Sicherungszustand überprüft werden muss.

Durch das erfindungsgemäße Sicherungssystem wird der Bediener also zielgerichtet auf problematische Schließstellungen der Halteeinrichtungen aufmerksam gemacht und kann sich dann in einer effektiven Weise von der ordnungsgemäßen Schließstellung der Halteeinrichtungen überzeugen.

Eine weitere Ausführungsform des erfindungsgemäßen Sicherungssystems ist in den Teilbildern a) bis c) der Fig. 2 dargestellt. Auch hier wird als Halteeinrichtung ein Schoßbügel 3 verwendet, der über eine Drehvorrichtung 4 in Richtung des Sitzes verkippbar ist und über eine Arretiervorrichtung 6 in verschiedenen Sicherungsstellungen festgestellt werden kann. Selbstverständlich sind jedoch auch andere Halteeinrichtungen, wie z.B. Schulterbügel u.dgl. denkbar, die auch über andere Verstellmechanismen von einer geöffneten Stellung in gesicherte Stellungen überführt werden können.

Auch bei der Halteeinrichtung der Ausführungsform gemäß Fig. 2 ist ein halbkreis- oder sichelförmiges Drehelement 5 vorgesehen, das an seinem unteren Ende eine nach außen vorstehende Nocke 7 aufweist, die wiederum Kippschalter 9 bis 11 betätigen kann. Im Gegensatz zum vorhergehenden Ausführungsbeispiel gemäß Fig. 1 sind jedoch hier nicht zwei Kippschalter, sondern drei Kippschalter 9 bis 11 vorgesehen. Auf diese Weise ist es möglich, drei Sicherungsbereiche zu definieren, wobei der erste Sicherungsbereich dann gegeben ist, wenn der erste Kippschalter 9 betätigt ist, der zweite Sicherungsbereich durch Betätigen der zwei Kippschalter 9 und 10 erreicht ist und der dritte Sicherungsbereich durch die Betätigung von allen drei Kippschaltern 9 bis 11 angezeigt wird. Dabei sind die Kippschalter 9 bis 11 so entlang der verschwenkbaren Nocke 7 angeordnet, dass bei einer Stellung im ersten Sicherungsbereich der Schoßbügel 3 so angeordnet ist, dass beleibte Erwachsene in dem Sitz 2 gesichert sind, während im zweiten Sicherungsbereich, wenn der Schoßbügel 3 bzw. das entsprechende Drehelement 5 mit der Nocke 7 die beiden Kippschalter 9 und 10 betätigt, ein normaler Erwachsener gesichert ist, wobei dies auch ausreichend ist für die Sicherung eines für die Benutzung des Fahrgeschäfts zugelassenen Kindes.

Zusätzlich wird jedoch bei der Ausführungsform gemäß Fig. 2 ein dritter Sicherungsbereich definiert, bei dem der Schoßbügel besonders nahe an den Sitz 2 herangeführt worden ist, so dass alle drei Kippschalter 9 bis 11 betätigt worden sind. In diesem Fall zeigt die Signalerzeugungseinrichtung mit der Nocke 7 und den Kippschaltern 9 bis 11 an, dass eine besonders dünne oder kleine Person, also insbesondere ein Kind, das für die Benutzung dieses Fahrgeschäfts noch nicht zugelassen ist oder der Begleitung eines Erwachsenen bedarf oder andere besondere Maßnahmen erfordert, sich in dem Sitz 2 befindet. Damit kann mit dem erfindungsgemäßen Sicherungssystem auch festgestellt werden, ob besonders kleine Kinder, die für das entsprechende Fahrgeschäft nicht zugelassen sind, in einem Sitz aufgenommen sind. Auch hier erzeugt die Signalerzeugungseinrichtung durch den Schaltungszustand mit den Schaltern 9 bis 11 ein Signal, das entweder direkt eine Warnung für den Bediener der Transportanlage oder des Fahrgeschäfts sowie eine Startverriegelung auslöst oder über eine nicht gezeigte Steuerungseinrichtung eine entsprechende Beeinflussung des Betriebsablaufs der Transportanlage oder des Fahrgeschäfts bewirkt.

Fig. 3 zeigt in den Teilbildern a) bis c) in entsprechenden Seitenansichten vergleichbar zu den Fig. 1 und 2 eine weitere Ausführungsform eines erfindungemäßen Sicherungssystems, bei dem zur Erzeugung von entsprechenden Schaltungszuständen entsprechend von drei Sicherungsbereichen an dem Drehelement 5 zwei Nocken 15 und 16 vorgesehen sind, die mit zwei Kippschaltern 9 und 10 zusammenwirken. Der erste Sicherungsbereich wird dadurch angezeigt, wenn die erste Nocke 15 mit dem ersten Kippschalter 9 im Eingriff steht und der Kippschalter 9 betätigt ist. Der zweite Sicherungsbereich ist erreicht, wenn der zweite Kippschalter 10 durch die erste Nocke 15 betätigt ist und der erste Kippschalter 9 wieder freigegeben ist, sich also in einem Freiraum zwischen den beiden Nocken 15 und 16 befindet.

Der dritte Sicherungsbereich wird angezeigt, wenn der erste Kippschalter 9 durch die zweite Nocke 16 betätigt wird, während der zweite Kippschalter 10 freigegeben ist. Hier ist zusätzlich eine nicht dargestellte Speichereinrichtung vorgesehen, die die vorangegangenen Betätigungen der beiden Kippschalter 9 und 10 registriert und damit die Schalterstellung - erster Kippschalter 9 betätigt und zweiter Kippschalter 10 nicht betätigt - dem dritten Sicherungsbereich zuordnet. Selbstverständlich könnte auch auf die entsprechende Speichereinrichtung verzichtet werden, wenn beispielsweise die zweite Nocke 16 so ausgebildet ist, dass sie im dritten Sicherungsbereich beide Kippschalter 9 und 10 betätigt.

Neben einem System mit diskreten Sicherungsbereichen bzw. Schalterstellungen, wie oben beschrieben, erstreckt sich der Entwurf auch auf kontinuierliche oder inkrementelle Systeme mit entsprechender Signalerfassung- und Verarbeitung.

## Patentansprüche

1. Fahrgeschäft-Sicherungssystem für Personen mit einer Halteeinrichtung (3), mit Hilfe der die zu sichernde Person am Verlassen eines gesicherten Aufenthaltsbereichs, insbesondere eines Sitzes (2) gehindert wird, wobei die Halteeinrichtung mindestens eine geöffnete und mehrere Sicherungsstellungen einnehmen kann, **dadurch gekennzeichnet, dass** mehrere definierte Sicherungsbereiche vorgesehen sind, wobei die verschiedenen Sicherungsstellungen der Halteeinrichtung mindestens einem ersten und einem zweiten Sicherungsbereich zugeordnet sind, die von einer der Halteeinrichtung (3) zugeordneten Signalerzeugungseinrichtung (7, 9, 10) ermittelt werden, wobei der erste Sicherungsbereich Sicherungsstellungen der Halteeinrichtung (3) umfasst, bei denen zwischen einer Steh-, Sitz- und/oder Lehnfläche des Aufenthaltsbereichs (2) und der Halteeinrichtung (3) oder Komponenten davon ein erster Abstand gegeben ist, der zweite Sicherungsbereich Sicherungsstellungen der Halteeinrichtung (3) umfasst, bei denen zwischen einer Steh-, Sitz- und/oder Lehnfläche des Aufenthaltsbereichs (2) und der Halteeinrichtung (3) oder Komponenten davon ein zweiter Abstand gegeben ist, wobei der erste Abstand größer als der zweite Abstand ist, wobei die Signalerzeugungseinrichtung (7, 9, 10, 11) in Abhängigkeit der Stellung der Halteeinrichtung (3) dann ein erstes Signal erzeugt, wenn sich die Halteeinrichtung im ersten Sicherungsbereich befindet, das den Betriebsablauf des Fahrgeschäfts so beeinflusst, dass das Fahrgeschäft anhält und/oder sein Start verhindert wird.

2. Fahrgeschäft-Sicherungssystem für Personen mit einer Halteeinrichtung (3), mit Hilfe der die zu sichernde Person am Verlassen eines gesicherten Aufenthaltsbereichs, insbesondere eines Sitzes (2) gehindert wird, wobei die Halteeinrichtung mindestens eine geöffnete und mehrere Sicherungsstellungen einnehmen kann, **dadurch gekennzeichnet, dass**
mehrere definierte Sicherungsbereiche vorgesehen sind, wobei die verschiedenen Sicherungsstellungen der Halteeinrichtung mindestens einem zweiten und einem dritten Sicherungsbereich zugeordnet sind, die von einer der Halteeinrichtung (3) zugeordneten Signalerzeugungseinrichtung (7, 9, 10) ermittelt werden, wobei der zweite Sicherungsbereich Sicherungsstellungen der Halteeinrichtung (3) umfasst, bei denen zwischen einer Steh-, Sitz- und/oder Lehnfläche des Aufenthaltsbereichs (2) und der Halteeinrichtung (3) oder Komponenten davon ein zweiter Abstand gegeben ist, der dritte Sicherungsbereich Sicherungsstellungen der Halteeinrichtung (3) umfasst, bei denen zwischen einer Steh-, Sitz- und/oder Lehnfläche des Aufenthaltsbereichs (2) und der Halteeinrichtung (3) oder Komponenten davon ein dritter Abstand gegeben ist, wobei der dritte Abstand kleiner als der zweite Abstand ist, wobei die Signalerzeugungseinrichtung (7, 9, 10, 11) in Abhängigkeit der Stellung der Halteeinrichtung (3) dann ein erstes Signal erzeugt, wenn sich die Halteeinrichtung im dritten Sicherungsbereich befindet, das den Betriebsablauf des Fahrgeschäfts so beeinflusst, dass das Fahrgeschäft anhält und/oder sein Start verhindert wird.

3. Sicherungssystem nach einem der Ansprüche 1 oder 2,
**dadurch gekennzeichnet, dass**
die Signalerzeugungseinrichtung in Abhängigkeit der Stellung der Halteeinrichtung (3) ein zweites Signal erzeugt, wenn die Halteeinrichtung (3) nicht im vorgeschriebenen Betriebszustand ist.

4. Fahrgeschäft-Sicherungssystem nach Anspruch 1 oder 2,
**dadurch gekennzeichnet, dass**
eine der Haltevorrichtung (3) zugeordnete zweite Signalerzeugungseinrichtung zur Erzeugung eines zweiten Signals vorgesehen ist und das zweite Signal unabhängig von der ersten Signalerzeugungseinrichtung erzeugt wird.

5. Fahrgeschäft-Sicherungssystem nach einem der Ansprüche 3 oder 4,
**dadurch gekennzeichnet, dass**
das zweite Signal den Bediener optisch und/oder akustisch über entsprechende Mittel warnt.

6. Fahrgeschäft-Sicherungssystem nach einem der vorhergehenden Ansprüche,
**dadurch gekennzeichnet, dass**
mehrere Aufenthaltsbereiche, insbesondere Sitze (2), mit Halteeinrichtung (3) und Signalerzeugungseinrichtung (7, 9, 10, 11) vorgesehen sind, wobei jeder Aufenthaltsbereich in dem System einzeln das Anhalten des Fahrgeschäfts und/oder die Verhinderung des Starts bewirkt, wenn sich die Halteeinrichtung (3) des betreffenden Aufenthaltsbereiches im ersten oder dritten Sicherungsbereich befindet.

7. Fahrgeschäft-Sicherungssystem nach einem der vorhergehenden Ansprüche,
**dadurch gekennzeichnet, dass**
eine Steuerungseinrichtung vorgesehen ist, die die Signale der Signalerzeugungseinrichtung(en) (7, 9, 10, 11), erhält und ein Ausgabesignal zur Steuerung des Betriebsablaufs des Fahrgeschäfts erzeugt, wobei insbesondere mittels des Ausgabesignals das Fahrgeschäft angehalten wird, wenn die Steuerungseinrichtung ein erstes oder zweites Signal der Signalerzeugungseinrichtung(en) (7, 9, 10, 11), erhält und/oder ein Wam- und Anzeigesignal, welches insbesondere den unsicheren Aufenthaltsbereich anzeigt, ausgegeben wird.

8. Fahrgeschäft-Sicherungssystem nach einem der vorhergehenden Ansprüche,
**dadurch gekennzeichnet, dass**
die Halteeinrichtung (3) eine Dreh-, Kipp- oder Schiebeeinrichtung (4) umfasst, mittels der die Halteeinrichtung oder Komponenten davon bezüglich einer Steh-, Sitz- und/oder Lehnfläche des Aufenthaltsbereichs (2) beweglich sind, wobei die Dreh-, Kipp- oder Schiebeeinrichtung Mittel einer Signalerzeugungseinrichtung umfasst, die die Dreh-, Kipp- oder Schiebeposition schrittweise oder kontinuierlich insbesondere entsprechend den Sicherungsbereichen anzeigen.

9. Fahrgeschäft-Sicherungssystem nach Anspruch 8,
**dadurch gekennzeichnet, dass**
die Mittel zur Anzeige der Dreh-, Kipp- oder Schiebeposition mindestens eine Nocke (7) oder induktive Näherungsschalter umfassen, die je nach Dreh-, Kipp- oder Schiebeposition mit zugeordneten Schaltungseinrichtungen (9, 10, 11) in Eingriff kommt.

10. Fahrgeschäft-Sicherungssystem nach Anspruch 9,
**dadurch gekennzeichnet, dass**
eine Nocke (7) und zwei Schaltungseinrichtungen (9, 10), insbesondere Taster, zum gegenseitigen Zusammenwirken vorgesehen sind, um zwei Schaltungszustände entsprechend von zwei Sicherungsbereichen zu schaffen, oder dass zwei Nocken (15, 16) und zwei Schaltungseinrichtungen (9, 10) oder ein Nocke (7) und drei Schaltungseinrichtungen (9, 10, 11) zum gegenseitigen Zusammenwirken vorgesehen sind, um mindestens drei Schaltungszustände entsprechend von drei Sicherungsbereichen zu schaffen.

11. Fahrgeschäft-Sicherungssystem nach Anspruch 9 oder 10,
**dadurch gekennzeichnet, dass**
die Halteeinrichtung eine Drehvorrichtung (4) umfasst, wobei die Drehvorrichtung ein sichelartiges Drehelement (5) umfasst, welches bei der Drehbewegung der Drehvorrichtung um eine Achse gedreht wird, so dass die von dem Drehelement hervorstehende(n) Nocke(n) (7; 15, 16) in Kontakt mit Kippschaltern (9, 10, 11) gelangen.

12. Fahrgeschäft-Sicherungssystem nach einem der vorhergehenden Ansprüche,
**dadurch gekennzeichnet, dass**
eine Eingabevorrichtung vorgesehen ist, mittels der das Fahrgeschäft für die Weiterfahrt freigegeben werden kann.

## Claims

1. An amusement ride securing system for persons with a retaining mechanism (3), with the aid of which the person to be secured is prevented from leaving a secured accommodation region, in particular a seat (2), wherein the retaining mechanism can assume at least one open and several securing positions, **characterised in that** several defined securing regions are provided, wherein the different securing positions of the retaining mechanism are associated with at least one first and one second securing region, which are detected by a signal generating mechanism (7, 9, 10) associated with the retaining mechanism (3), wherein the first securing region includes securing positions of the retaining mechanism (3), in which there is a first spacing between a standing, seating and/or leaning surface of the accommodation region (2) and the retaining mechanism (3) or components thereof, the second securing region includes securing positions of the retaining mechanism (3), in which there is a second spacing between a standing, seating and/or leaning surface of the accommodation region (2) and the retaining mechanism (3) or components thereof, wherein the first spacing is larger than the second spacing, wherein the signal generating mechanism (7, 9, 10, 11) generates a first signal depending on the position of the retaining mechanism (3), if the retaining mechanism is in the first securing region, which signal affects the operating sequence of the amusement ride, such that the amusement ride comes to a halt and/or is prevented from starting.

2. The amusement ride securing system for persons with a retaining mechanism (3), with the aid of which the person to be secured is prevented from leaving a secured accommodation region, in particular a seat (2), wherein the retaining mechanism can assume at least one open and several securing positions, **characterised in that**
several defined securing regions are provided, wherein the different securing positions of the retaining mechanism are associated with at least one second and one third securing region, which are detected by a signal generating mechanism (7, 9, 10) associated with the retaining mechanism (3), wherein the second securing region includes securing positions of the retaining mechanism (3), in which there is a second spacing between a standing, seating and/or leaning surface of the accommodation region (2) and the retaining mechanism (3) or components thereof, the third securing region includes securing positions of the retaining mechanism (3), in which there is a third spacing between a standing, seating and/or leaning surface of the accommodation region (2) and the retaining mechanism (3) or components thereof, wherein the third spacing is smaller than the second spacing, wherein the signal generating mechanism (7, 9, 10, 11) generates a first signal depending on the position of the retaining mechanism (3), if the retaining mechanism is in the third securing region, which signal affects the operating sequence of the amusement ride, such that the amusement ride comes to a halt and/or is prevented from starting.

3. The securing system according to one of claims 1 or 2,
**characterised in that**
the signal generating mechanism generates a second signal depending on the position of the retaining mechanism (3), if the retaining mechanism (3) is not in the required operating state.

4. The amusement ride securing system according to claim 1 or 2,
**characterised in that**
a second signal generating mechanism associated with the retaining device (3), is provided for generating a second signal and the second signal is generated independently of the first signal generating mechanism.

5. The amusement ride securing system according to one of claims 3 or 4,
**characterised in that**
the second signal warns the user optically and/or audibly via suitable means.

6. The amusement ride securing system according to one of the preceding claims,
**characterised in that**
several accommodation regions, in particular seats (2), with a retaining mechanism (3) and a signal generating mechanism (7, 9, 10, 11) are provided, wherein each accommodation region in the system individually causes the amusement ride to come to a halt and/or starting to be prevented if the retaining mechanism (3) of the respective accommodation region is in the first or third securing region.

7. The amusement ride securing system according to one of the preceding claims, **characterised in that**
a control mechanism is provided which obtains the signals of the signal generating mechanism(s) (7, 9, 10, 11) and generates an output signal for controlling the operating sequence of the amusement ride, wherein the amusement ride is brought to a halt, in particular by means of the output signal, if the control mechanism obtains a first or second signal of the signal generating mechanism(s) (7, 9, 10, 11), and/or there is emitted a warning and indicating signal which in particular indicates the unsecured accommodation region.

8. The amusement ride securing system according to one of the preceding claims,
**characterised in that**
the retaining mechanism (3) includes a rotating, tilting, or sliding mechanism (4), by means of which the retaining mechanism or components thereof are movable relative to a standing, seating and/or leaning surface of the accommodation region (2), wherein the rotating, tilting, or sliding mechanism includes means of a signal generating device, which indicate the rotating, tilting, or sliding position incrementally or continuously in particular corresponding to the securing regions.

9. The amusement ride securing system according to Claim 8,
**characterised in that**
the means for indicating the rotating, tilting, or sliding position include at least one cam (7) or inductive proximity switch which engages associated switching mechanisms (9, 10, 11) in accordance with the rotating, tilting or sliding position.

10. The amusement ride securing system according to Claim 9,
**characterised in that**
a cam (7) and two switching mechanisms (9, 10), in particular push-buttons,
are provided for mutual interaction, in order to create two switching states corresponding to two securing regions, or **in that** two cams (15, 16) and two switching mechanisms (9, 10) or one cam (7) and three switching mechanisms (9, 10, 11) are provided for mutual interaction, in order to create at least three switching states corresponding to three securing regions.

11. The amusement ride securing system according to Claim 9 or 10,
**characterised in that**
the retaining mechanism includes a rotating device (4), wherein the rotating device includes a sickle-like rotating member (5), which is rotated during the rotating movement of the rotating device around an axis, such that the cam(s) (7; 15, 16) protruding from the rotating member come into contact with trigger switches (9, 10, 11).

12. The amusement ride securing system according to one of the preceding claims,
**characterised in that**
an input device is provided, by means of which the amusement ride can be released to resume travel.

## Revendications

1. Système de sécurité pour attraction foraine pour des personnes comprenant un dispositif de retenue (3), qui permet d'empêcher la personne à sécuriser de quitter une zone de séjour sécurisée, en particulier un siège (2), le dispositif de retenue pouvant occuper au moins une position de sécurité ouverte et plusieurs positions de sécurité, **caractérisé en ce que** plusieurs zones de sécurité définies sont prévues, les différentes positions de sécurité du dispositif de retenue étant attribuées à au moins une première et une seconde zones de sécurité, qui sont déterminées par un dispositif de génération de signaux (7, 9, 10) attribué au dispositif de retenue (3), la première zone de sécurité comprenant des positions de sécurité du dispositif de retenue (3), dans lesquelles on a un premier espacement entre une surface en position debout, une surface en position assise et/ou une surface en position inclinée de la zone de séjour (2) et le dispositif de retenue (3) ou des composants de celui-ci, la seconde zone de sécurité comprenant des positions de sécurité du dispositif de retenue (3), dans lesquelles on a un second espacement entre une surface en position debout, une surface en position assise et/ou une surface en position inclinée de la zone de séjour (2) et le dispositif de retenue (3) ou des composants de celui-ci, le premier espacement étant supérieur au second espacement, le dispositif de génération de signaux (7, 9, 10, 11) générant un premier signal en fonction de la position du dispositif de retenue (3) dans le cas où le système de retenue se trouve dans la première zone de sécurité qui influence le déroulement du service de l'attraction foraine de telle sorte que l'attraction foraine s'arrête et/ou son démarrage est empêché.

2. Système de sécurité pour attraction foraine pour des personnes comprenant un dispositif de retenue (3), qui permet d'empêcher la personne à sécuriser de quitter une zone de séjour sécurisé, en particulier un siège (2), le dispositif de retenue pouvant occuper au moins une position de sécurité ouverte et plusieurs positions de sécurité,
**caractérisé en ce que**
plusieurs zones de sécurité définies sont prévues, les différentes positions de sécurité du dispositif de retenue étant attribuées à au moins une seconde et une troisième zones de sécurité, lesquelles sont déterminées par un dispositif de génération de signaux (7, 9, 10) attribué au dispositif de retenue (3), la seconde zone de sécurité comprenant des positions de sécurité du dispositif de retenue (3), dans lesquelles on a un second espacement entre une surface en position debout, une surface en position assise et/ou une surface en position inclinée de la zone de séjour (2) et le dispositif de retenue (3) ou des composants de celui-ci, la troisième zone de sécurité comprenant des positions de sécurité du dispositif de retenue (3), dans lesquelles on a un troisième espacement entre une surface en position debout, une surface en position assise et/ou une surface en position inclinée de la zone de séjour (2) et le dispositif de retenue (3) ou des composants de celui-ci, le troisième espacement étant inférieur au second espacement, le dispositif de génération de signaux (7, 9, 10, 11) générant un premier signal en fonction de la position du dispositif de retenue (3) dans le cas où le dispositif de retenue se trouve dans la troisième zone de sécurité qui influence le déroulement du service de l'attraction foraine de telle sorte que l'attraction foraine s'arrête et/ou son démarrage est empêché.

3. Système de sécurité selon l'une quelconque des revendications 1 ou 2,
**caractérisé en ce que**
le dispositif de génération de signaux génère un second signal en fonction de la position du dispositif de retenue (3) lorsque le dispositif de retenue (3) n'est pas dans l'état de service prescrit.

4. Système de sécurité pour attraction foraine selon la revendication 1 ou 2,
**caractérisé en ce que**
un second dispositif de génération de signaux attribué au dispositif de retenue (3) est prévu pour la génération d'un second signal et le second signal est généré indépendamment du premier dispositif de génération de signaux.

5. Système de sécurité pour attraction foraine selon l'une quelconque des revendications 3 ou 4, **caractérisé en ce que**
le second signal avertit l'opérateur de façon optique et/ou acoustique par des moyens appropriés.

6. Système de sécurité pour attraction foraine selon l'une quelconque des revendications précédentes,
**caractérisé en ce que**
plusieurs zones de séjour, en particulier des sièges (2) avec dispositif de retenue (3) et dispositif de génération de signaux (7, 9, 10, 11) sont prévus, chaque zone de séjour entraînant dans le système individuellement l'arrêt de l'attraction foraine et/ou l'empêchement du démarrage lorsque le dispositif de retenue (3) de la zone de séjour correspondante se trouve dans la première ou la troisième zone de sécurité.

7. Système de sécurité pour attraction foraine selon l'une quelconque des revendications précédentes, **caractérisé en ce**
**qu'**un dispositif de commande est prévu, qui reçoit les signaux du (des) dispositif(s) de génération de signaux (7, 9, 10, 11) et génère un signal de sortie pour la commande du déroulement de service de l'attraction foraine, l'attraction foraine étant arrêtée en particulier au moyen du signal de sortie lorsque le dispositif de commande reçoit un premier ou un second signal du (des) dispositif(s) de génération de signaux (7, 9, 10, 11) et/ou un signal d'avertissement et d'affichage, qui indique en particulier la zone de séjour non sécurisée, est sorti.

8. Système de sécurité pour attraction foraine selon l'une quelconque des revendications précédentes, **caractérisé en ce que**
le dispositif de retenue (3) comprend un dispositif rotatif, basculant ou coulissant (4) au moyen duquel le dispositif de retenue ou des composants de celui-ci sont mobiles par rapport à une surface en position debout, une surface en position assise et/ou une surface en position inclinée de la zone de séjour (2), le dispositif rotatif, basculant ou coulissant comprenant des moyens d'un dispositif de génération de signaux qui indiquent la position de rotation, de basculement ou de coulissement pas à pas ou de façon continue en particulier en fonction des zones de sécurité.

9. Système de sécurité pour attraction foraine selon la revendication 8,
**caractérisé en ce que**
les moyens pour l'affichage de la position de rotation, de basculement ou de coulissement comprennent au moins une came (7) ou des détecteurs de proximité inductifs, qui viennent en prise avec des dispositifs de commutation (9, 10, 11) attribués en fonction de la position de rotation, de basculement ou de coulissement.

10. Système de sécurité pour attraction foraine selon la revendication 9,
**caractérisé en ce que**
une came (7) et deux dispositifs de commutation (9, 10), en particulier boutons-poussoirs, sont prévus pour la coopération réciproque, pour créer deux états de commutation en fonction de deux zones de sécurité, ou **en ce que** deux cames (15, 16) et deux dispositifs de commutation (9, 10) ou une came (7) et trois dispositifs de commutation (9, 10, 11) sont prévus pour la coopération réciproque pour créer au moins trois états de commutation en fonction de trois zones de sécurité.

11. Système de sécurité pour attraction foraine selon la revendication 9 ou 10,
**caractérisé en ce que**
le dispositif de retenue comprend un dispositif de rotation (4), le dispositif de rotation comprenant un élément de rotation (5) en forme de croissant, qui est tourné autour d'un axe lors du mouvement de rotation du dispositif de rotation, de telle sorte que la (les) came(s) (7 ; 15, 16) dépassant de l'élément de rotation vient/viennent en contact avec des interrupteurs basculants (9, 10, 11).

12. Système de sécurité pour attraction foraine selon l'une quelconque des revendications précédentes,
**caractérisé en ce que**
il est prévu un dispositif d'entrée qui permet d'autoriser l'attraction foraine pour la poursuite de la marche.
